# EUROPÄISCHE PATENTSCHRIFT

(11) **EP 1 807 629 B1**
(45) Veröffentlichungstag und Bekanntmachung des Hinweises auf die Patenterteilung: **13.04.2011**
(21) Anmeldenummer: 05792194.2
(22) Anmeldetag: 29.09.2005
(51) Int. Cl.: F16B 13/06

(54) **SPREIZANKER**
EXPANSION ANCHOR
CHEVILLE A ANCRAGE EXPANSIBLE

(30) Priorität: 04.11.2004 DE 102004053255
(43) Veröffentlichungstag der Anmeldung: 18.07.2007
(73) Patentinhaber: fischerwerke GmbH & Co. KG, 72178 Waldachtal (DE)
(72) Erfinder: LINKA, Martin, 72160 Horb (DE)
(74) Vertreter: Suchy, Ulrich Johannes
(86) Internationale Anmeldenummer: PCT/EP2005/010506
(87) Internationale Veröffentlichungsnummer: WO 2006/048088

(56) Entgegenhaltungen:
- DE-A1- 19 815 334
- US-A- 4 636 123
- US-A- 4 640 654
- US-B1- 6 270 303

## Beschreibung

Die Erfindung betrifft einen Spreizanker mit den Merkmalen des Oberbegriffs des Anspruchs 1.

Spreizanker sind an sich bekannt. Sie weisen einen Spreizkörper, meist in Form eines Spreizkonus, und eine Spreizhülse, die durch Einziehen des Spreizkörpers aufweitbar ist, auf. Das Aufweiten der Spreizhülse wird als Aufspreizen bezeichnet. Der Spreizkörper weist üblicherweise einen Schaft an seinem durchmesser-kleineren Ende auf, auf dem die Spreizhülse verschiebbar ist. Außer einer Konusform ist beispielsweise auch eine Pyramidenform oder eine Keilform für den Spreizkörper denkbar, wenn auch nicht üblich. In Längsrichtung kann der Spreizkörper ballig oder hohlrund sein. Die Spreizhülse ist, jedenfalls wenn sie aus Metall besteht, üblicherweise mit Schlitzen versehen, die von einem vorderen, dem Spreizkörper zugewandten Rand der Spreizhülse ausgehen und die Spreizhülse in Spreizzungen unterteilen. Die Spreizhülse ist dadurch mit geringerer Kraft spreizbar. Mit vorderer Rand der Spreizhülse ist der dem Spreizkörper zugewandte Rand gemeint, mit dem voraus die Spreizhülse zur Verankerung des Spreizankers in ein Bohrloch eingebracht wird.

Zur Verankerung des Spreizankers wird dieser mit dem Spreizkörper voraus in ein Bohrloch eingebracht, bis die Spreizhülse im Bohrloch versenkt ist. Anschließend wird der Spreizkörper ein Stück weit zurückgezogen, wobei die Spreizhülse reibungsbedingt unbewegt im Bohrloch bleibt. Der Spreizkörper wird dadurch in die Spreizhülse eingezogen und spreizt diese auf. Die Spreizhülse wird gegen eine Bohrlochwandung gedrückt und verankert den Spreizanker reibschlüssig im Bohrloch. Zusätzlich kann die Spreizhülse in die Bohrlochwand eingedrückt werden, was einen Formschluss zusätzlich zum Reibschluß bewirkt. Die Verankerung ist dadurch verbessert. Eine Zugbeanspruchung des Spreizkörpers durch Befestigung eines Gegenstands am verankerten Spreizanker zieht den Spreizkörper stärker in die Spreizhülse ein und erhöht dadurch eine Verankerungskraft.

Aus der Patentschrift US 4,640,654 ist ein derartiger Spreizanker bekannt. Der Spreizanker weist einen konischen Spreizkörper und eine Spreizhülse auf. Die Spreizhülse ist als geschlitzte Hülse ausgeführt, die durch Einziehen des Spreizkörpers in die Spreizhülse aufspreizbar ist. Die Spreizhülse weist eine Stufung auf, so dass ein dem Spreizkörper zugewandter vorderer Rand der Spreizhülse eine verringerte Wanddicke und ein verringertes Außenmaß aufweist.

Damit ein Spreizanker zugzonentauglich ist, muss er ein Nachspreizverhalten aufweisen. Bei einer Bohrlocherweiterung infolge beispielsweise einer Rissbildung muss sich die Spreizhülse weiter aufspreizen. Dies wird bei einer Zugbeanspruchung des Spreizkörpers dadurch erreicht, dass der Spreizkörper durch die Zugbeanspruchung weiter in die Spreizhülse eingezogen wird und sie weiter aufspreizt, d.h. nachspreizt. Voraussetzung für das Nachspreizen ist, dass sich die Spreizhülse nicht axial im Bohrloch bewegt.

Ein zugzonentauglicher Spreizanker ist beispielsweise in der Offenlegungsschrift DE 198 15 334 A1 dargestellt. Der Spreizanker weist ebenfalls einen Spreizkörper und eine geschlitzte Spreizhülse Spreizschenkeln auf. Die Spreizhülse umfasst eine Innenhülse und eine Außenhülse, wobei in den Spreizschenkeln der Innenhülse Ausnehmungen angebracht sind. Diese Ausführung der Spreizhülse reduziert die Anpressfläche der Spreizhülse auf den Beton. Der Spreizanker kann dadurch mit einem geringeren Drehmoment vorgespannt werden.

Aufgabe der Erfindung ist es, einen Spreizanker der vorstehend erläuterten Art vorzuschlagen, der eine hohe Verankerungskraft und ein gutes Nachspreizverhalten aufweist.

Diese Aufgabe wird erfindungsgemäß durch die Merkmale des Anspruchs 1 gelöst. Die Spreizhülse des erfindungsgemäßen Spreizankers weist an ihrem vorderen, dem Spreizkörper zugewandten Rand eine verringerte Wanddicke auf, die durch ein verringertes Außenmaß der Spreizhülse im Bereich ihres vorderen Randes erreicht wird. Kennzeichnend für den erfindungsgemäßen Spreizanker ist, dass die Wanddicke am vorderen Rand der Spreizhülse durch Umformen, also beispielsweise durch Prägen oder Schmieden, verringert ist. Durch das Umformen wird eine Materialverfestigung erreicht. Weitere Vorteile des Umformens sind eine schnelle, einfache und preisgünstige Möglichkeit zur Verringerung der Wanddicke am vorderen Rand der Spreizhülse und dass kein Abfall anfällt. Bei Aufspreizen der Spreizhülse durch Einziehen des Spreizkörpers in die Spreizhülse wird die Spreizhülse an ihrem vorderen Rand von dem sich beispielsweise konisch aufweitenden Spreizkörper schräg nach außen geformt. Das verringerte Außenmaß der Spreizhülse an ihrem vorderen Rand ermöglicht die Schrägsteltung des vorderen Randes der Spreizhülse nach außen um die Verringerung des Außenmaßes der Spreizhülse und ggf. zusätzlich eine Dicke eines Spalts zwischen einer Bohrlochwandung, in die der Spreizanker eingebracht ist, und der Spreizhülse. Durch die Schrägstellung der Spreizhülse an ihrem vorderen Rand wird die Spreizhülse beim Aufspreizen vom Spreizkörper mit einer Kante am vorderen Rand der Spreizhülse linienförmig gegen bzw. in die Bohrlochwandung gedrückt. Die linienförmige Anlage der Spreizhülse an der Bohrlochwandung ergibt eine hohe Spannung (Kraft pro Fläche), mit der der Spreizkörper die Spreizhülse gegen die Bohrlochwandung drückt. Die Spreizhülse wird an ihrem vorderen Rand in die Bohrlochwandung gedrückt, wodurch sie zusätzlich zu einem Reibschluss durch Formschluss in der Bohrlochwandung verankert ist. Ein axialer Halt der Spreizhülse im Bohrloch, wenn sich das Bohrloch beispielsweise infolge einer Rissbildung erweitert, ist dadurch verbessert. Die Gefahr, dass die Spreizhülse bei einer Bohrlocherweiterung rutscht, d.h. sich axial im Bohrloch verschiebt, ist verringert. Das Nachspreizverhalten, das einen axialen Halt der Spreizhülse im Bohrloch voraussetzt, ist dadurch verbessert. Weiterer Vorteil des erfindungsgemäßen Spreizankers ist, dass seine Verankerungskraft durch den Formschluss der Spreizhülse mit der Bohrlochwandung erhöht ist.

Eine Ausgestaltung der Erfindung sieht vor, dass sich die Wanddicke der Spreizhülse an ihrem vorderen Rand mit einer Ringstufe verringert. Die Ringstufe bildet eine zweite Kante der Spreizhülse, die beim Aufspreizen vom Spreizkörper gegen die Bohrlochwandung gedrückt wird. Die von der Ringstufe gebildete zweite Kante liegt linienförmig an der Bohrlochwandung an, so dass auch hier die Spannung, mit der der Spreizkörper die Spreizhülse gegen die Bohrlochwandung drückt, erhöht ist. An der Ringstufe drückt der Spreizkörper die Spreizhülse in die Bohrlochwandung, wodurch ein Formschluss erzielt ist, der das Nachspreizverhalten des Spreizankers verbessert und die Verankerungskraft erhöht.

Eine Ausgestaltung der Erfindung sieht vor, dass sich die Wanddicke der Spreizhülse um etwa das Produkt aus einer axialen Länge des wanddicken-verringerten Abschnitts der Spreizhülse und dem Sinus eines Winkels, unter dem eine Spreizfläche des Spreizkörpers zu einer Axialen verläuft, verringert. Bei einem Spreizkonus als Spreizkörper ist der genannte Winkel der halbe Konuswinkel. Durch die genannte Bemessungsregel wird erreicht, dass die Spreizhülse mit ihrer Kante am vorderen Rand und ihrer Kante an der Ringstufe, an der sich die Wanddicke verringert, gleichzeitig an der Bohrlochwandung anliegt, wenn die Spreizhülse im wanddicken-verringerten Bereich mit dem Winkel der Spreizfläche des Spreizkörpers schräg nach außen steht, d.h. an der Spreizfläche des Spreizkörpers anliegt. Diese Ausgestaltung der Erfindung erreicht ein Anliegen und Einformen der Spreizhülse an der bzw. in die Bohrlochwandung mit beiden genannten Kanten. Auch diese Ausgestaltung der Erfindung trägt zu einer hohen Verankerungskraft des Spreizankers im Bohrloch bei.

Eine Ausgestaltung der Erfindung sieht eine von einer Kreisform abweichende Querschnittsform der Spreizhülse vor. Die Spreizhülse ist durch Schlitze in Spreizzungen unterteilt. Die Spreizzungen weisen in Umfangsrichtung eine stärkere Wölbung auf als es ihrem Abstand von einer Längsmittelachse, d.h. ihrem Wölbungsradius, entspricht. Beim Einbringen des Spreizankers in das Bohrloch und beim Einziehen des Spreizkörpers in die Spreizhülse liegen die Spreizzungen mit ihren Längsrändern linienförmig am Spreizkörper und in ihren Längsmitten zwischen den Schlitzen an der Bohrlochwandung an. Die Spreizzungen können in radialer Richtung federn und liegen unter Vorspannung an der Bohrlochwandung an. Dadurch wird ein guter axialer Halt der Spreizhülse im Bohrloch zum Aufspreizen erreicht, ein Rutschen der Spreizhülse beim Aufspreizen wird vermieden. Die Reibung zwischen Spreizhülse und Bohrlochwandung ist größer als die Reibung zwischen der Spreizhülse und dem Spreizkörper. Des Weiteren verbessert die linienförmige Anlage der Spreizzungen an ihren Längsrändern am Spreizkörper ein Gleitverhalten der Spreizhülse auf dem Spreizkörper und verringert eine Fressneigung (Kaltverschweißen).

Die Erfindung wird nachfolgend an Hand eines in der Zeichnung dargestellten Ausführungsbeispiels näher erläutert.

Es zeigen:
- Figur 1: eine perspektivische Darstellung eines erfindungsgemäßen Spreizankers;
- Figur 2: einen Halbschnitt des Spreizankers aus figur 1; und
- Figur 3: eine Stirnansicht einer Spreizhülse des Spreizankers aus Figur 1 von vom.

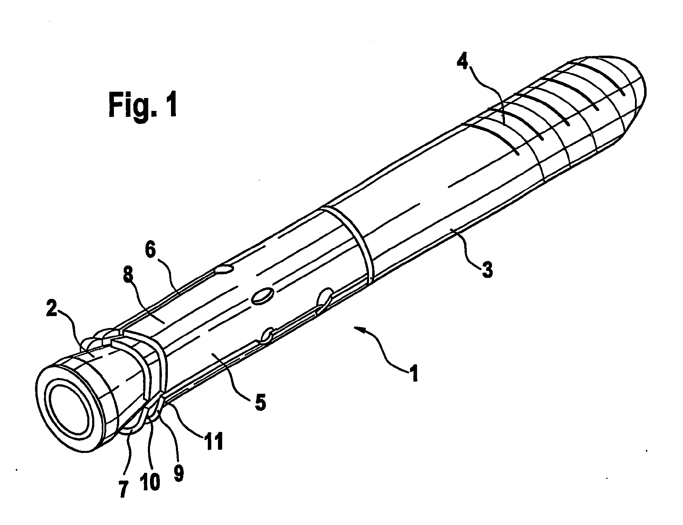

Der in Figur 1 dargestellte, erfindungsgemäße Spreizanker 1 weist einen Spreizkonus 2 als Spreizkörper auf, der sich an seinem durchmesser-kleineren Ende einstückig mit einem Schaft 3 fortsetzt. An einem hinteren, dem Spreizkonus 2 fernen Ende ist der Schaft 3 mit einem Gewinde 4 versehen.

Auf dem Schaft 3 befindet sich eine rohrförmige Spreizhülse 5, die durch Biegen aus einem Blech hergestellt ist. Im Bereich der Spreizhülse 5 weist der Schaft 3 einen um etwa das Doppelte einer Wanddicke der Spreizhülse 5 verkleinerten Durchmesser auf. Die Spreizhülse 5 ist mit Längsschlitzen 6 versehen, die von einem vorderen, dem Spreizkonus 2 zugewandten Rand 7 ausgehen und in einem mittleren Bereich der Spreizhülse 5 enden. Die Schlitze 6 unterteilen die Spreizhülse 5 in Spreizzungen 8.

Zur Verankerung des Spreizankers 1 in einem in Figur 1 nicht dargestellten Bohrloch wird der Spreizanker 1 mit dem Spreizkonus 2 voraus in das Bohrloch eingebracht, so dass die Spreizhülse 5 sich im Bohrloch befindet und das Gewinde 4 zumindest ein Stück weit aus dem Bohrloch vorsteht. Am Gewinde 4 wird eine Zugkraft auf den Spreizkonus 2 ausgeübt, die den Spreizkonus 2 in ein vorderes Ende der Spreizhülse 5 einzieht und die Spreizzungen 8 im Bereich des vorderen Randes 7 auseinander und gegen eine Bohrlochwandung drückt. Dieser Vorgang wird als Aufspreizen bezeichnet. Der Spreizanker 1 wird kraft- und eventuell zusätzlich formschlüssig im Bohrloch verankert.

Am vorderen Rand 7 weist die Spreizhülse 5 eine verringerte Wanddicke auf. Im dargestellten und beschriebenen Ausführungsbeispiel der Erfindung beträgt die verringerte Wanddicke etwa die Hälfte der Wanddicke der Spreizhülse 5 im übrigen Bereich der Spreizhülse 5. Die Wanddicke der Spreizhülse 5 verringert sich an einer Ringstufe 9 mit einem Abstand von wenigen Millimetern vom vorderen Rand 7 der Spreizhülse 5. Die Ringstufe 9 befindet sich auf einer Außenseite der Spreizhülse 5, die verringerte Wanddicke verringert ein Außenmaß, d.h. einen Außendurchmesser der Spreizhülse 5. Durch die Verringerung der Wanddicke der Spreizhülse 5 mit der Ringstufe 9 weist die Spreizhülse 5 zwei in Umfangsrichtung verlaufende Kanten auf, nämlich eine Kante 10 am vorderen Rand 7 und eine Kante 11 an der Ringstufe 9.

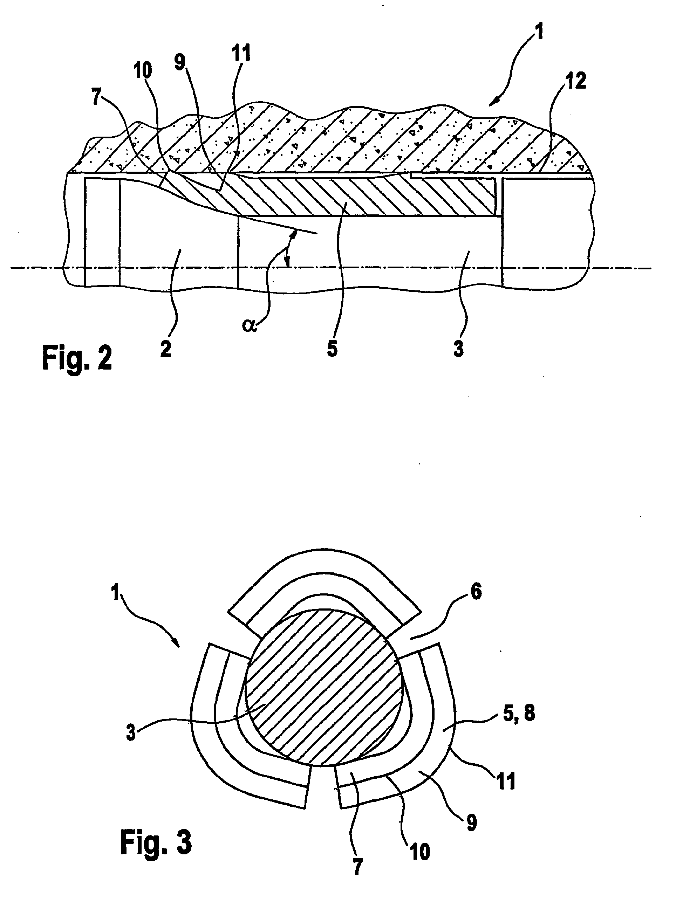

Wird der Spreizkonus 2 wie in Figur 2 dargestellt zum Aufspreizen der Spreizhülse 5 in letztere eingezogen, formt er den vorderen Bereich der Spreizhülse 5 schräg seinem Konuswinkel entsprechend nach außen. Dadurch gelangen die beiden Kanten 10, 11 am vorderen Rand 7 und an der Ringstufe 9 der Spreizhülse 5 in Anlage an eine Bohrlochwandung 12. Die Anlage ist linienförmig. Beim weiteren Einziehen des Spreizkonus 2 in die Spreizhülse 5 drückt der Spreizkonus 2 die Kanten 10, 11 gegen die Bohrlochwandung 12 und aufgrund der hohen Spannung (Kraft pro fläche), die durch die linienförmige Anlage bewirkt ist, in die Bohrlochwandung 12 ein. Außer einem Kraftschluss (Reibschluss) der aufgespreizten Spreizhülse 5 ergibt sich dadurch ein Formschluss aufgrund der in die Bohrlochwandung 12 eingedrückten Kanten 10, 11 der Spreizhülse 5. Die Spannung, mit der die Spreizhülse 5 im Bereich ihres vorderen Randes am Spreizkonus 2 anliegt, ist nur ein Bruchteil der Spannung, mit der der Spreizkonus 2 die Kanten 10, 11 der Spreizhülse 5 gegen die Bohrlochwandung 12 drückt, da die Anlage der Spreizhülse 5 am Spreizkonus 2 flächenförmig ist. Dadurch wird sichergestellt, dass der Spreizkörper 2 in der Spreizhülse 5 und nicht die Spreizhülse 5 im Bohrloch gleitet. Der durch das Eindrücken der Kanten 10, 11 der Spreizhülse 5 in die Bohrlochwandung 12 bewirkte Formschluss erhöht eine Verankerungskraft des Spreizankers 1 im Bohrloch. Weiterer Vorteil des Formschlusses ist ein verbesserter axialer Halt der Spreizhülse 5 im Bohrloch. Bei einer Bohrlochaufweitung beispielsweise infolge einer Rissbildung bleibt die Spreizhülse 5 axial im Bohrloch gehalten und rutscht nicht aus dem Bohrloch heraus. Bei einer Zugbelastung des Spreizkonus 2 über den Schaft 3 wird der Spreizkonus 2 tiefer in die Spreizhülse 5 eingezogen und spreizt diese nach.

Die Wanddicke der Spreizhülse 5 an ihrem vorderen Rand 7 ist durch Umformen verringert, also beispielsweise durch Prägen oder Schmieden. Das Umformen bewirkt eine Materialverfestigung und damit eine Erhöhung der Festigkeit der Kante 10 am vorderen Rand 7 der Spreizhülse 5.

Eine Höhe der Ringstufe 9, d.h. die Verringerung der Wanddicke der Spreizhülse 5 am vorderen Rand 7, ist so groß gewählt, dass beide Kanten 10, 11 der Spreizhülse 5 an der Bohrlochwandung 12 anliegen. Dies wird erreicht, wenn die Verringerung der Wanddicke dem Produkt aus einer axialen Länge des wanddicken-verringerten Bereichs der Spreizhülse 5, also dem axialen Abstand der beiden Kanten 10, 11, und dem Sinus des Winkels a, unter dem eine Umfangsfläche des Spreizkonus 2 zur Bohrlochwartdung 12 und damit zu einer gedachten Axialrichtung verläuft, entspricht. Der Winkel a ist der halbe Konuswinkel. Die Umfangsfläche des Spreizkonus 2 kann auch als Spreizfläche bezeichnet werden. Der Spreizkonus 2 formt die Spreizhülse 5 an ihrem vorderen Rand 7 mit dem genannten Winkel α schräg nach außen.

Wie in der Stirnansicht der Spreizhülse 5 gemäß Figur 3 zu sehen, weisen die Spreizzungen 8 der Spreizhülse 5 eine größere Wölbung in Umfangsrichtung auf als es ihrem Abstand von einer Längsmittelachse des Spreizankers 1 entspricht. Die Wölbung der Spreizzungen 8 in Umfangsrichtung muss nicht kreisbogenförmig sein. Dadurch liegen die Spreizzungen 8 linienförmig mit ihren Längsrändern am Schaft 3 bzw. am Spreizkonus 2 an und weisen in ihren Längsmitten einen Radialabstand vom Schaft 3 und dem Spreizkonus 2 auf. Um diesen Radialabstand können die Spreizzungen 8 elastisch nach innen federn.

Beim Einbringen des Spreizankers 1 in das Bohrloch drückt die Bohrlochwandung 12 die Spreizzungen 8 elastisch nach innen, wodurch die Spreizzungen 8 unter Vorspannung an der Bohrlochwandung 12 anliegen, wenn sie noch nicht aufgespreizt sind. Dadurch wird ein guter axialer Halt der Spreizhülse 5 im Bohrloch erreicht der verhindert, dass die Spreizhülse 5 beim Aufspreizen aus dem Bohrloch herausgezogen wird. Es wird sichergestellt, dass der Spreizkonus 2 beim Aufspreizen in die Spreizhülse 5 eingezogen wird und diese aufspreizt anstatt sie aus dem Bohrloch herauszuschieben.

## Patentansprüche

1. Spreizanker, mit einem Spreizkörper (2) und mit einer Spreizhülse (5), die durch Einziehen des Spreizkörpers (2) in die Spreizhülse (5) aufspreizbar ist, wobei die Spreizhülse (5) an einem dem Spreizkörper (2) zugewandten, vorderen Rand (7) eine verringerte Wanddicke und ein verringertes Außenmaß aufweist, **dadurch gekennzeichnet, dass** der vordere Rand (7) eine gegenüber der restlichen Spreizhülse (5) erhöhte Festigkeit aufweist.

2. Spreizanker nach Anspruch 1, **dadurch gekennzeichnet, dass** sich die Wanddicke der Spreizhülse (5) mit einer Ringstufe (9) verringert.

3. Spreizanker nach Anspruch 1, **dadurch gekennzeichnet, dass** die Wanddicke an dem dem Spreizkörper (2) zugewandten, vorderen Rand (7) der Spreizhülse (5) durch Umformen verringert ist.

4. Spreizanker nach Anspruch 1, **dadurch gekennzeichnet, dass** sich die Wanddicke der Spreizhülse (5) um etwa das Produkt aus axialer Länge des wanddicken-verringerten Abschnitts der Spreizhülse (5) und dem Sinus eines Winkels (α), unter dem eine Spreizfläche des Spreizkörpers (2) zu einer Axialen verläuft, verringert.

5. Spreizanker nach Anspruch 1, **dadurch gekennzeichnet, dass** der vordere Rand (7) schräg nach außen gestellt ist.

## Claims

1. Expansible anchor, having an expander body (2) and having an expansion sleeve (5) which is arranged to be expanded by drawing the expander body (2) into the expansion sleeve (5), the expansion sleeve (5) having at its front margin (7) facing towards the expander body (2) a reduced wall thickness and a reduced outer dimension, **characterized in that** the front margin (7) has increased strength relative to the remainder of the expansion sleeve (5).

2. Expansible anchor according to claim 1, **characterized in that** the wall thickness of the expansion sleeve (5) is reduced by means of an annular step (9).

3. Expansible anchor according to claim 1, **characterized in that** the wall thickness at the front margin (7) of the expansion sleeve (5) facing towards the expander body (2) has been reduced by mechanical shaping.

4. Expansible anchor according to claim 1, **characterized in that** the wall thickness of the expansion sleeve (5) is reduced by an amount corresponding to approximately the product of the axial length of the reduced-wall-thickness portion of the expansion sleeve (5) and the sine of the angle (α) at which the expander surface of the expander body (2) runs with respect to an axial.

5. Expansible anchor according to claim 1, **characterized in that** the front margin (7) is angled outwards.

## Revendications

1. Cheville d'ancrage expansible munie d'un corps de déploiement (2) et d'une douille déployable (5), et pouvant être écartée par enfoncement dudit corps de déploiement (2) dans ladite douille déployable (5), laquelle douille déployable (5) présente une épaisseur de paroi réduite et une cote extérieure réduite sur un bord antérieur (7) tourné vers ledit corps de déploiement (2), **caractérisée par le fait que** le bord antérieur (7) offre une robustesse accrue par rapport à la partie restante de la douille déployable (5).

2. Cheville d'ancrage expansible selon la revendication 1, **caractérisée par le fait que** l'épaisseur de paroi de la douille déployable (5) se réduit par un gradin annulaire (9).

3. Cheville d'ancrage expansible selon la revendication 1, **caractérisée par le fait que** l'épaisseur de paroi est réduite par défonnation sur le bord antérieur (7) de la douille déployable (5), tourné vers le corps de déploiement (2).

4. Cheville d'ancrage expansible selon la revendication 1, **caractérisée par le fait que** l'épaisseur de paroi de la douille déployable (5) se réduit approximativement de la valeur du produit d'une longueur axiale de la région de ladite douille déployable (5), à épaisseur de paroi réduite ; et du sinus d'un angle (α) que le tracé d'une surface d'écartement du corps de déploiement (2) décrit avec une ligne axiale.

5. Cheville d'ancrage expansible selon la revendication 1, **caractérisée par le fait que** le bord antérieur (7) est configuré à l'oblique vers l'extérieur.
